# EUROPÄISCHE PATENTANMELDUNG

(11) **EP 4 372 148 A1**
(43) Veröffentlichungstag der Anmeldung: **22.05.2024**
(21) Anmeldenummer: 23020501.5
(22) Anmeldetag: 09.11.2023
(51) Int. Cl.: E01D 19/00, F16B 7/04, F16B 7/18, E01D 15/133, E04G 7/22

(54) **BAUGRUPPE, BESTEHEND AUS EINEM ROHR UND EINER VERBINDUNGSBAUGRUPPE**

(30) Priorität: 17.11.2022 AT 2182022
(71) Anmelder: Bürscher, Franz, 3343 Hollenstein an der Ybbs (AT)
(72) Erfinder: Hofbauer, Leonhard, 8010 Graz (AT)

(57) **Zusammenfassung**

Die Erfindung betrifft eine Baugruppe, welche ein Rohr (2) und eine daran verankerten Verbindungsbaugruppe (4, 11) umfasst, wobei die Verbindungsbaugruppe (4, 11) einen oder mehrere Blechteile (6, 12) und eine oder mehrere Verschraubungen (7) umfasst welche gemeinsam die Mantelfläche des Rohres (2) umschlingen. Der bzw. die Blechteile (6, 12) weisen einen Flächenbereich (8, 13) aufweisen, welcher in Längsrichtung des Rohres (2) über dessen Ende hinaus ragt, und an dem hinausragenden Flächenbereich (8, 13) befinden sich ein oder mehrere Durchgangslöcher (9, 14), welche so positioniert sind, dass der Betrag der vektoriellen Summe der Normalabstände ihrer Mittelpunkte zur Schwerachse der Querschnittsfläche des Rohres (2) im Wesentlichen gleich Null ist.

## Beschreibung

Die Erfindung betrifft eine Baugruppe, welche eine Rohr und eine daran verankerten Verbindungsbaugruppe umfasst, sowie Gegenstände in denen die Baugruppe zum Einsatz kommt.

Statisch nennenswert beanspruchte Fachwerke werden oftmals aus geraden Rohren und Verbindungsbaugruppen gebildet, wobei die Rohre als die geraden Fachwerksstreben dienen und die Verbindungsbaugruppen die einzelnen Rohre an den Knoten des Fachwerks verbinden.

Gemäß einem weit verbreiteten Konstruktionsprinzip, welches hier des Weiteren mit "Rohrschellenprinzip" benannt wird, umfasst eine Verbindungsbaugruppe einen oder mehrere Blechteile und eine oder mehrere Verschraubungen. Wenn die Verbindungsbaugruppe dabei bestimmungsgemäß an einem Rohr montiert ist, ist das Rohr in Umfangsrichtung durch die Kombination aus einem oder mehreren Blechteilen und einer oder mehreren Verschraubungen vollkommen umschlungen, wobei die Achsen der Verschraubungen im rechten Winkel zu diesem neben dem Rohr vorbei verlaufen und die Verschraubungen auf den durch den Blechteil bzw. die Blechteile gebildeten Teil der Umschlingung eine Zugkraft ausüben, durch welche diese verengt und somit an die Mantelfläche des Rohres angedrückt wird. Durch Reibschluss sind damit die umschlingenden Blechteile gegen Relativbewegung gegenüber dem Rohr parallel zur Mantelfläche des Rohres sicher gehalten. Vorteile des Befestigungsprinzips sind unter anderem Einfachheit, Lösbarkeit, hohe Flexibilität, großflächige und damit sehr gute Krafteinleitung.

Mit dem Begriff "Verschraubung" ist in diesem Dokument jeweils die Kombination aus einer Schraube oder einem Gewindebolzen und mindestens einer damit in Gewindeeingriff befindlichen Gewindemutter gemeint.

Die Schriften US 5593143 A und WO 2018203034 A1 zeigen Beispiele bei denen das beschriebene Rohrschellenprinzip angewendet wird, und durch Verbinden zweier der beschriebenen Verbindungsbaugruppen ein Fachwerksknoten gebildet wird. Der Fachwerksknoten stellt dabei eine T-Verbindung zwischen einem durchgehenden und einem endenden Rohr dar. Die beiden Verbindungsbaugruppen sind dabei durch eine Verschraubung (US 5593143 A) bzw. zwei Verschraubungen (WO 2018203034 A1) miteinander verbunden, wobei die Verbindung zwischen den beiden Verbindungsbaugruppen bei gelockerten Verschraubungen winkeleinstellbar ist.

Die der Erfindung zu Grunde liegende Aufgabe besteht darin, die aus der US 5593143 A und der WO 2018203034 A1 bekannten Bauweisen für einen Fachwerksknoten dahingehend zu verbessern, dass Einleitung von Kräften in das endende Rohr, welche zur Längsrichtung des endenden Rohres ausschließlich parallel ausgerichtet sind, ohne Einleitung von Biegemomenten in das endende Rohr erfolgen kann.

Für das Lösen der Aufgabe wird davon ausgegangen, dass das endende Rohr mit einer Verbindungsbaugruppe versehen ist, auf welche das eingangs beschriebene Rohrschellenprinzip mit Umschlingung der Mantelfläche des Rohres mit Blechteil(en) und Verschraubung(en) zutrifft.

Als erfindungsgemäße Weiterentwicklung dazu wird vorgeschlagen, einen oder mehrere Blechteile der Verbindungsbaugruppe des endenden Rohres in Längsrichtung des endenden Rohres über das Ende dieses Rohres hinausragend auszubilden, und an dem hinausragenden Bereich ein oder mehrere Durchgangslöcher vorzusehen, welche so positioniert sind, dass der Betrag der vektoriellen Summe der Normalabstände ihrer Mittelpunkte zur Schwerachse der Querschnittsfläche des Rohres im Wesentlichen gleich Null ist.

Die besagten Durchgangslöcher können dann für den Durchgang von Verschraubungen verwendet werden, mit denen die Verbindungsbaugruppe des endenden Rohres mit einem weiteren Teil, typischerweise der Verbindungsbaugruppe eines durchgehenden Rohres eines Fachwerkes, hergestellt wird. Über die damit gebildete Verbindung ist die in der Aufgabenstellung genannte Krafteinleitung in das endende Rohr möglich.

Die Erfindung wird an Hand von Zeichnungen veranschaulicht und näher erläutert:
- Fig. 1:: zeigt in Schrägrissansicht eine erste beispielhafte vorteilhafte erfindungsgemäße Baugruppe in Einbausituation als Teil eines Fachwerks.
- Fig. 2:: zeigt die erfindungsgemäße Baugruppe von Fig. 1 allein und in zwei Ansichten in gegeneinander um 90° geschwenkten Lagen. Verschraubungen sind durch strichpunktierte Linien symbolisiert dargestellt. Bei der oberen Ansicht liegt die Blickrichtung parallel zur Achsrichtung der Verschraubungen und bei der unteren Ansicht normal dazu.
- Fig. 3:: zeigt in Schrägrissansicht einen einzelnen der beiden Blechteile der in Fig. 1 und Fig. 2 gezeigten Verbindungsbaugruppe.
- Fig. 4:: zeigt gleichartig wie Fig. 2 eine zweite beispielhafte erfindungsgemäße Baugruppe.
- Fig. 5:: zeigt in Schrägrissansicht eine Fußwegbrücke in welcher die Verbindungsbaugruppe von Fig. 1 bis Fig. 3 vielfach eingebaut ist.

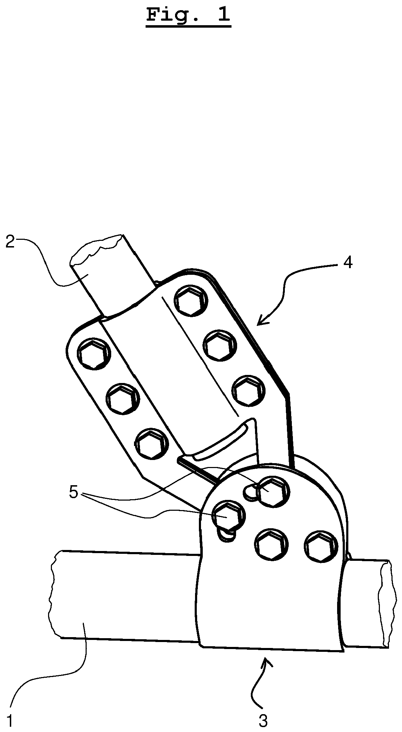

Fig. 1 zeigt eine T-Verbindung aus einem durchgehenden Rohr 1 und einem endenden Rohr 2, wobei am durchgehenden Rohr 1 eine Verbindungsbaugruppe 3 befestigt ist und am endenden Rohr 2 eine weitere Verbindungsbaugruppe 4, wobei die beiden Verbindungsbaugruppen dem eingangs vorgestellten Rohrschellenprinzip entsprechen, und wobei die beiden Verbindungsbaugruppen 3, 4 durch zwei Verschraubungen 5 miteinander verbunden sind.

Für das Verbinden der beiden Verbindungsbaugruppen 3, 4 miteinander durch die Verschraubungen 5 verlaufen die beiden Gewindebolzen der Verschraubungen 5 jeweils durch zueinander fluchtende Schraubendurchgangsbohrungen an beiden Verbindungsbaugruppen 3, 4 hindurch und die beiden Verbindungsbaugruppen 3, 4 werden rund um diese Schraubendurchgangsbohrungen durch Druck zwischen jeweils einem Schraubenkopf und einer Gewindemutter der jeweiligen Verschraubung 5 aneinander gepresst. Idealerweise sind die durch die Schraubendurchgangsbohrungen durchdrungenen Bereiche der Verbindungsbaugruppen 3, 4 so positioniert, dass die Achsen der beiden Rohre 1, 2 in einer gemeinsamen Ebene zu liegen kommen. Die Winkellage der Achsen der beiden Rohre 1, 2 sind zueinander einstellbar so lange die Verschraubungen 5 gelockert sind; dies wird erreicht, indem an zumindest einer der Verbindungsbaugruppen 3, 4 die Schraubendurchgangsbohrungen für die Verschraubungen 5 als Langloch ausgebildet sind.

Die für die Erfindung am stärksten bedeutende Baugruppe aus den in Fig. 1 gezeigten Teilen besteht aus dem endenden Rohr 2 und der unmittelbar daran befestigten Verbindungsbaugruppe 4.

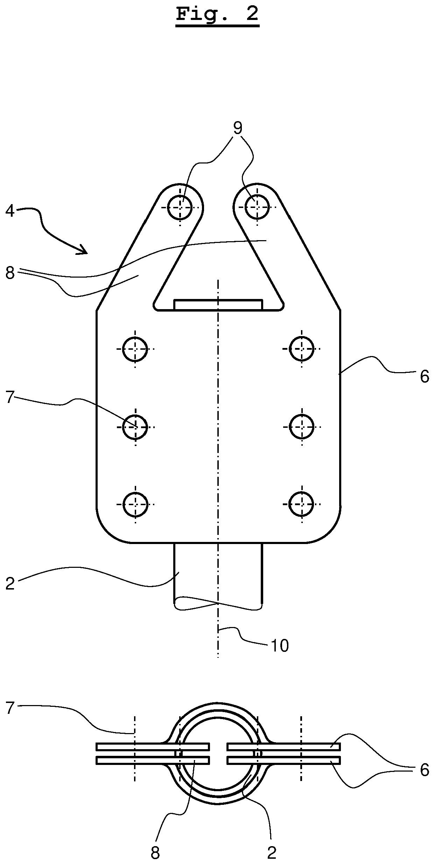

Das Erfindungsprinzip wird im Folgenden an Hand von Fig. 2, welche nur das endende Rohr 2 und die unmittelbar daran befestigte Verbindungsbaugruppe 4 zeigt, detailliert erläutert:
Die Bauweise gemäß Fig. 2 entspricht dem eingangs vorgestellten, an sich bekannten sogenannten Rohrschellenprinzip:
Die Verbindungsbaugruppe 4 umfasst in diesem Beispiel zwei Blechteile 6 und sechs Verschraubungen 7. Die Verbindungsbaugruppe 4 umschlingt das Rohr 2 in dessen Umfangsrichtung dabei durch die Kombination aus den beiden Blechteilen 6 und den Verschraubungen 7 vollständig. Dabei verlaufen die Achsen der Verschraubungen 7 im rechten Winkel zu dessen Längsrichtung neben dem Rohr 2 vorbei. Die Verschraubungen 7 üben auf die beiden Blechteile 6 eine Zugkraft aus, durch welche der durch diese Teile 6 gebildete Teil der Umschlingung des Rohres 2 verengt und somit an die Mantelfläche des Rohres 2 angedrückt wird.

Die erfindungsgemäße Weiterentwicklung dazu besteht darin, dass die Blechteile 6 der Verbindungsbaugruppe 4 in dessen Längsrichtung über das stirnseitige Ende des Rohres 2 hinausragen, und dass sich an diesen hinausragenden Flächenbereichen 8 Durchgangslöcher 9 befinden, welche so positioniert sind, dass der Betrag der vektoriellen Summe der Normalabstände ihrer Mittelpunkte zur Schwerachse 10 der Querschnittsfläche des Rohres 2 im Wesentlichen gleich Null ist.

In dem Beispiel gemäß Fig. 2 sind genau zwei Durchgangslöcher 9 vorgesehen und sie sind so positioniert, dass ihre Mittelpunkte von der Schwerachse 10 der Querschnittsfläche des Rohres 2 in entgegengesetzter Richtung um den genau gleichen Betrag entfernt sind.

Mit "Schwerachse der Querschnittsfläche des Rohres" ist jene Gerade gemeint, welche parallel zur Längsrichtung des Rohres 2 und durch die Schwerpunkte der einzelnen Querschnittsflächen des Rohres 2 verläuft. Diese Formulierung wird anstatt des einfacheren Begriffes "Rohrachse" deswegen gewählt, weil die Querschnittsfläche des Rohres 2 nicht zwangsläufig eine symmetrische Kreisringfläche sein muss. Die Erfindung ist im Allgemeinen bei allen Rohrquerschnittsformen vorteilhaft anwendbar, bei denen die Querschnittsfläche eine leere Fläche ringförmig vollständig umschließt.

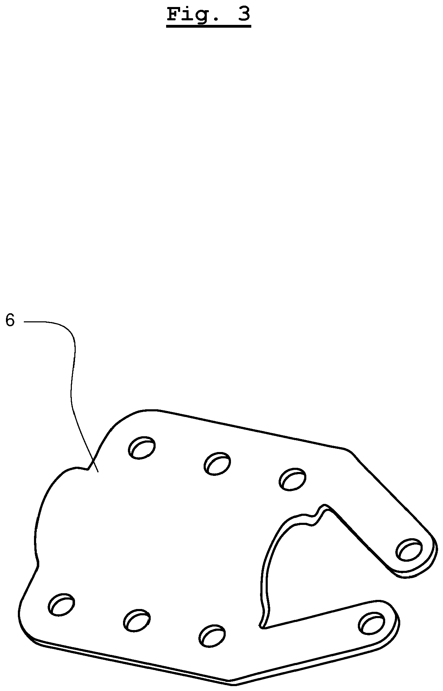

Fig. 3 dient vor allem zur direkten Anschaulichkeit des Blechteils Teils 6, welcher in der Verbindungsbaugruppe 3 in zweifacher Ausführung zur Anwendung kommt. Es ist vorteilhaft jenen Flächenbereich des Blechteils 6, welcher sich bestimmungsgemäß um das Rohr 2 herum erstreckt, derart gekrümmt auszubilden, dass er in montiertem Zustand nicht nur an einer oder mehreren Linien sondern flächig - möglichst großflächig - satt am Rohr 2 anliegt. Die diesbezügliche Bemessung des Krümmungsradius dieses Flächenbereichs in elastisch entspanntem Zustand liegt im Bereich des fachlichen Handelns fachlich versierter Personen.

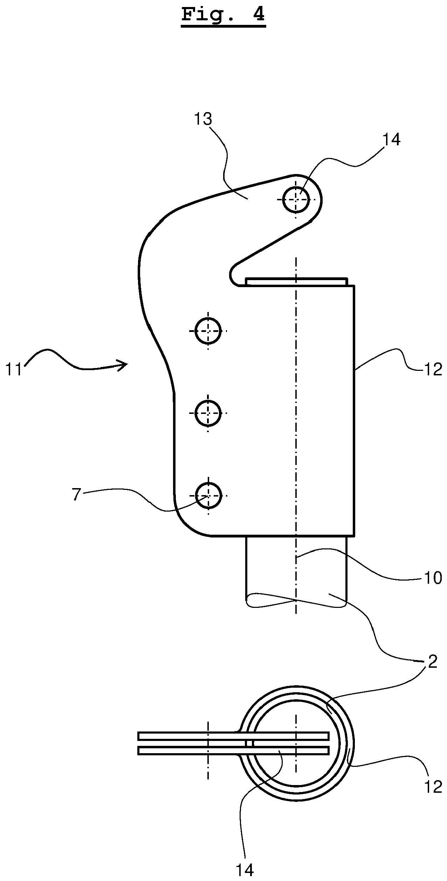

Fig. 4 zeigt eine weitere erfindungsgemäße Baugruppe welche dem besagten Rohrschellenprinzip entspricht.

Die Verbindungsbaugruppe 11 umfasst in diesem Beispiel nur einen einzigen Blechteil 12 und drei Verschraubungen 7. Die Verbindungsbaugruppe 11 umschlingt das Rohr 2 in dessen Umfangsrichtung dabei durch die Kombination aus dem Blechteil 12 und den Verschraubungen 7 vollständig. Dabei verlaufen die Achsen der Verschraubungen 7 wiederum im rechten Winkel zu dessen Längsrichtung neben dem Rohr 2 vorbei und die Verschraubungen 7 üben auf den Blechteil 12 eine Zugkraft aus, durch welche der durch diesen gebildeter Teil der Umschlingung des Rohres 2 verengt und somit an die Mantelfläche des Rohres 2 angedrückt wird. Idealerweise ist der Blechteil 12 so bemessen, dass er in montiertem Zustand großflächig an der Mantelfläche des Rohres 2 anliegt.

Die erfindungsgemäße Weiterentwicklung dazu besteht darin, dass der Blechteil 12 der Verbindungsbaugruppe 11 in dessen Längsrichtung über das stirnseitige Ende des Rohres 2 hinausragt, und dass sich an den hinausragenden Flächenbereichen 13 ein Durchgangsloch 14 befindet, dessen Mittelpunkt auf der Schwerachse 10 der Querschnittsfläche des Rohres 2 liegt.

Gegenüber der Bauweise von Fig. 2 ist an der Bauweise von Fig. 4 vorteilhaft, dass mit weniger Verschraubungen 7 das Auslangen gefunden wird und dass der Reibschluss zwischen der Verbindungsbaugruppe 11 und dem Rohr 2 noch besser ist. Nachteilig ist, dass der Blechteil 12 bei der Einleitung von Längskraft in das Rohr 2 partiell etwas ungünstiger belastet wird als die vergleichbaren Blechteile 6 gemäß Fig. 2.

Bei beiden gezeigten Beispielen sind an den Blechteilen 6, 12, die Durchgangslöcher für die Verschraubungen 7 zum Verengen der Verbindungsbaugruppe 4, 11 und die Durchgangslöcher 9, 14 für das Verbinden der Verbindungsbaugruppe 4, 11 mit einem weiteren Teil jeweils an Teilbereichen der Blechteile 6, 12 angeordnet, welche zu einem gemeinsamen ebenen Flächenbereich des jeweiligen Blechteils 6, 12 gehören. Damit wird auf einfache Weise erreichbar, dass die Blechteile 6, 12 alleine durch Biegung aus zugeschnittenen ebenen Blechen gebildet werden können. Es bedarf dadurch keiner aufwändigeren Prozessschritte wie beispielsweise Beulen, Prägen, Tiefziehen, Schweißen etc. Damit wird es möglich die Blechteile 6, 12 auch als Einzelstücke oder in Kleinstserien unter wirtschaftlich vernünftigen Rahmenbedingungen herzustellen.

Ein sehr wichtiger Anwendungsfall der erfindungsgemäßen Baugruppe ist die Bildung von Fachwerken. Es können mehrere Baugruppen, welche jeweils aus einem endenden Rohr 2 und einer daran erfindungsgemäß verankerten Verbindungsbaugruppe 4, 11 bestehen an einzelnen Fachwerksknoten durch Verschraubungen miteinander verbunden werden.

Es ist aber auch möglich - und durch Fig. 1 beispielhaft gezeigt, - einen Fachwerksknoten zwischen einem endenden Rohr 2 und einem durchgehenden Rohr 1 zu bilden. Wie in Fig. 1 dargestellt ist es dabei besonders vorteilhaft wenn auch das durchgehende Rohr 1 mit einer Verbindungsbaugruppe 3 ausgestattet ist welche dem besagten Rohrschellenprinzip entspricht.

Mit Hilfe der erfindungsgemäßen Bauweise und unter Anwendung des Konstruktionsprinzips "Rohrschelle" auch für durchgehende, als Fachwerksstab dienende Rohre, ist es sehr einfach möglich Fachwerke in vielerlei Ausführungsvarianten zu bilden, einfach indem Rohre passend abgeschnitten werden und an passenden Stellen entsprechende Verbindungsbaugruppen angebracht und miteinander verankert werden. Neben einem Werkzeug zum Abschneiden der Rohre ist nur mehr ein Werkzeug für das Anziehen der Verschraubungen erforderlich.

Ein besonders wertvoller Anwendungsfall der erfindungsgemäßen Baugruppe betrifft den Bau von Fußwegbrücken. Derartige Brücken sind oftmals an Orten erwünscht, welche durch fahrbaren Maschinen und Kräne für den Lasttransport nicht oder nur sehr umständlich erreichbar sind und manchmal überhaupt nur zu Fuß zu erreichen sind. In diesen Fällen müssen alle für den Brückenbau erforderlichen Bauteile und Werkzeuge an den Einsatzort getragen werden.

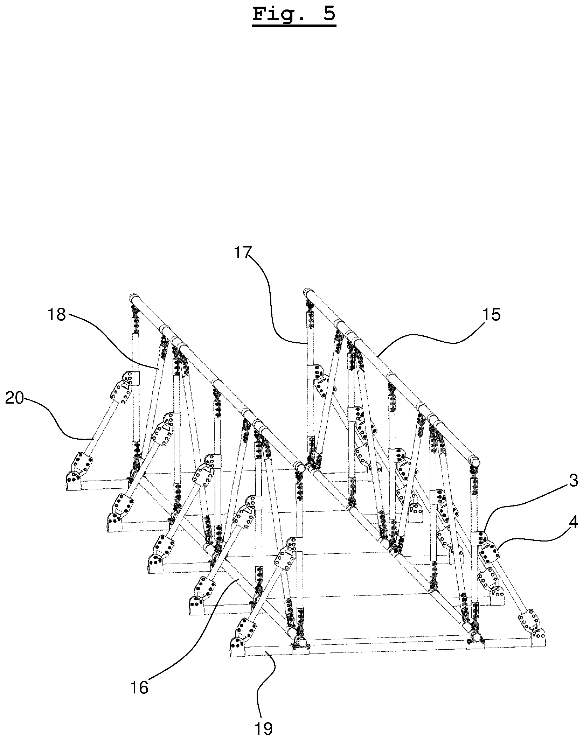

Fig. 5 zeigt dazu beispielhaft eine Fußwegbrücke, in welcher die erfindungsgemäße Baugruppe aus einem endenden Rohr und einer erfindungsgemäßen Verbindungsbaugruppe vielfach (sechsundfünfzig mal) zum Einsatz kommt. Sie weist zwei ebene Fachwerke auf, welche jeweils ein Handlaufrohr 15 und ein bodenseitiges Längsrohr 16 aufweisen, welche durch jeweils fünf Steherrohre 17 und vier Diagonalrohre 18 verbunden sind. Dabei kommt die erfindungsbemäße Verbindungsbaugruppe 4 an den Steherrohren 17 und an den Diagonalrohren 18 zum Einsatz und bildet dabei mit jeweils einer rohrschellenartigen Baugruppe 3 am Handlaufrohr 15 bzw. am bodenseitigen Längsrohr 16 einen Fachwerksknoten. Die Fußwegbrücke weist zusätzlich fünf bodenseitige Querrohre 19 auf, welche sich unter der Gehfläche quer zur Längsrichtung der Fußwegbrücke beidseits über die Gehfläche hinaus erstrecken. Diagonal zu den rechten Winkeln zwischen den Endbereichen der bodenseitigen Querrohre 19 und den Steherrohren 17 ist jeweils ein Stützrohr 20 angeordnet, welches an beiden Enden wiederum erfindungsgemäß mit einer Verbindungsbaugruppe 4 ausgestattet ist, über welche eine Verbindung zu jeweils einer weiteren rohrschellenartigen Verbindungsbaugruppe 3 am bodenseitigen Querrohr 19 bzw. am Steherrohr 17 hergestellt wird.

Wenn die Fußwegbrücke gemäß Fig. 5 beispielsweise sechs Meter lang ist, eine Wegbreite von einem Meter aufweist, und für eine zulässige Gewichtsbelastung von 400 kg pro m2 ausgelegt ist, braucht kein einziger ihrer Einzelteile schwerer als 25 kg zu sein. Sofern die Rohre schon anderweitig zugeschnitten wurden sind für den Zusammenbau nur mehr zwei Schraubendreherwerkzeuge erforderlich. Wenn die Rohre noch nicht zugeschnitten wurden ist auf der Baustelle zusätzlich ein Werkzeug für das Ablängen der Rohre erforderlich. Damit wird der Zusatzvorteil gewonnen, dass Maße der der Brücke unmittelbar an die vor Ort festgestellten Bedingungen angepasst werden können.

Der Bau von metallischen Fußwegbrücken abseits von Straßen wird damit deutlich einfacher möglich wie der Bau von vergleichbar komfortabel nutzbaren hölzernen Fußwegbrücken an derartigen Orten, wobei das Ergebnis vielfach langlebiger ist und deutlich weniger Wartungsaufwand verursacht.

## Patentansprüche

1. Baugruppe, welche ein Rohr (2) und eine daran verankerten Verbindungsbaugruppe (4, 11) umfasst, wobei die Verbindungsbaugruppe (4, 11) einen oder mehrere Blechteile (6, 12) und eine oder mehrere Verschraubungen (7) umfasst, wobei die Mantelfläche des Rohres (2) durch die Kombination aus den einen oder mehreren Blechteilen (6, 12) und den einen oder mehreren Verschraubungen (7) vollkommen umschlungen ist, wobei die Achsen der Verschraubungen (7) im rechten Winkel zu diesem neben dem Rohr vorbei verlaufen und die Verschraubungen (7) auf den durch den Blechteil (12) bzw. die Blechteile (6) gebildeten Teil der Umschlingung eine Zugkraft ausüben, durch welche diese an die Mantelfläche des Rohres (2) angedrückt wird,
**dadurch gekennzeichnet, dass**
der bzw. die Blechteile (6, 12) einen Flächenbereich (8, 13) aufweisen, welcher in Längsrichtung des Rohres (2) über dessen Ende hinaus ragt, und dass sich an dem hinausragenden Flächenbereich (8, 13) ein oder mehrere Durchgangslöcher (9, 14) befinden, wobei die Summe jener Vektoren, welche jeweils normal zur Schwerachse der Querschnittsfläche des Rohres (2) ausgerichtet sind, und von dieser zum Mittelpunkt von jeweils einem der ein- oder mehreren Durchgangslöcher (9, 14) gerichtet sind, und deren Betrag jeweils gleich dem Abstandsmaß dieses Mittelpunktes zur Schwerachse der Querschnittsfläche des Rohres (2) ist, im Wesentlichen gleich Null ist.

2. Baugruppe nach Anspruch 1, **dadurch gekennzeichnet, dass** die Verbindungsbaugruppe (4) zwei zueinander gleiche Blechteile (6) umfasst.

3. Baugruppe nach Anspruch 2, **dadurch gekennzeichnet, dass** jeder der Blechteile (6) zwei der Durchgangslöcher (9) aufweist.

4. Baugruppe nach Anspruch 1, **dadurch gekennzeichnet, dass** die Verbindungsbaugruppe (4) genau ein Stück des Blechteils (13) aufweist.

5. Baugruppe nach einem der Ansprüche 1 bis 4, **dadurch gekennzeichnet, dass** die Durchgangslöcher (9, 14) der Blechteile (6, 12) an ebenen Teilbereichen der Blechteile (6, 12) angeordnet sind, an welchen weitere Durchgangslöcher, durch welche hindurch die Verschraubungen (7) verlaufen, angeordnet sind.

6. Verbindungsknoten zwischen zwei Rohren, welches eine der Baugruppe nach einem der Ansprüche 1 bis 5 aufweist, wobei durch eines der Durchgangslöcher (9, 14) hindurch eine Verschraubung (5) verläuft, durch welche die Baugruppe mit einer weiteren Verbindungsbaugruppe (3) eines weiteren Rohr (1) verbunden ist, wobei auch die weitere Verbindungsbaugruppe (3) einen oder mehrere Blechteile und eine oder mehrere Verschraubungen umfasst, und wobei die Mantelfläche des weiteren Rohres (1) durch die Kombination aus den einen oder mehreren dieser Blechteilen und den einen oder mehreren dieser Verschraubungen vollkommen umschlungen ist, wobei die Achsen der Verschraubungen im rechten Winkel zu diesem neben dem Rohr (1) vorbei verlaufen und die Verschraubungen auf den durch den durch den bzw. die Blechteilen gebildeten Teil der Umschlingung eine Zugkraft ausüben, durch welche diese an die Mantelfläche des Rohres (1) angedrückt wird.

7. Verbindungsknoten nach Anspruch 6, **dadurch gekennzeichnet, dass** die beiden Baugruppen (3, 4) durch zwei oder mehr Verschraubungen (5) verbunden sind und dass zumindest eine der Schraubendurchgangsöffnungen durch welche hindurch eine der Verschraubungen (5) verläuft ein Langloch ist.

8. Fußwegbrücke welche ein oder mehrere Fachwerke mit Rohren als Fachwerksstäbe umfasst, **dadurch gekennzeichnet, dass** die Fachwerksknoten zwischen einzelnen dieser Rohre Verbindungsknoten nach Anspruch 6 oder 7 sind.

9. Fußwegbrücke nach Anspruch 8, **dadurch gekennzeichnet, dass** sie zwei ebene Fachwerke aufweist, welche jeweils ein Handlaufrohr (15) und ein bodenseitiges Längsrohr (16) aufweisen, welche durch Steherrohre (17) und Diagonalrohre (18) verbunden sind, wobei sowohl die aus einem der Steherrohre (17) und die an diesem montierte Verbindungsbaugruppe (4) als auch die aus einem der Diagonalrohre (18) und die an ihm montierten Verbindungsbaugruppe (4) bestehenden Baugruppen, Baugruppen gemäß Anspruch 1 sind.

10. Fußwegbrücke nach Anspruch 9, **dadurch gekennzeichnet, dass** bodenseitige Querrohre (19) seitlich über den Gehbereich der Fußwegbrücke überstehen und an den überstehenden Längsbereiche durch jeweils ein Stützrohr (20) mit einem Steherrohr (17) verbunden sind, wobei die aus dem Stützrohr (20) und der daran montierten Verbindungsbaugruppe (4) bestehende Baugruppe eine Baugruppe (4) gemäß Anspruch 1 ist.
